**Europäisches Patentamt**

**European Patent Office**

**Office européen des brevets**

(19)

(11) Veröffentlichungsnummer: **0 006 837**
**A1**

(12) # EUROPÄISCHE PATENTANMELDUNG

(21) Anmeldenummer: **79890013.0**

(22) Anmeldetag: **06.06.79**

(51) Int. Cl.³: **B 29 C 29/00**, B 29 B 1/00,
B 29 F 3/00

(30) Priorität: **28.06.78 AT 4707/78**

(43) Veröffentlichungstag der Anmeldung: **09.01.80**
**Patentblatt 80/1**

(84) Benannte Vertragsstaaten: **DE FR GB IT**

(71) Anmelder: **Wien-Fischamender Metallwarenfabrik**
**Josef Suschny & Söhne, Neusiedler Strasse 23,**
**A-2401 Fischamend (AT)**

(72) Erfinder: **Nemeskeri, Nikolaus, Bahngasse 30, A-7210**
**Mattersburg (AT)**

(74) Vertreter: **Kretschmer, Adolf, Dipl-Ing.,**
**Schottengasse 3a, A-1014 Wien (AT)**

(54) **Verfahren zur Herstellung von Granulat aus Vorprodukten aus thermoplastischen Kunststoffen und Vorrichtung zur Durchführung dieses Verfahrens.**

(57) Das Verfahren zur Herstellung von Granulat aus thermoplastischen Kunststoffen geht von Vorprodukten, wie z. B. Kunststoffabfällen, aus, welche auf Grund ihrer Beschaffenheit oder großen Oberfläche Wasser aufnehmen können. Um ein weiterverarbeitbares Produkt aus solchen Abfällen zu erhalten, wird das Vorprodukt bevorzugt in einem Folienextruder (1) erhitzt und extrudiert und unmittelbar an der Austrittsstelle (11) aus dem Folienextruder (1) mit Luft getrocknet und hierauf mit der verbleibenden Extrusionswärme einem Strangextruder (13) zugeführt und zu Granulat zerkleinert.

- 1 -

Verfahren zur Herstellung von Granulat aus Vorprodukten aus thermoplastischen Kunststoffen und Vorrichtung zur Durchführung dieses Verfahrens

Die Erfindung bezieht sich auf ein Verfahren zur Herstellung von Granulat aus Vorprodukten aus thermoplastischen Kunststoffen mit hoher spezifischer Oberfläche, insbesondere Faserabfällen, beispielsweise Polyamidfaserabfällen, durch Extrudieren des Kunststoffes in Strangform, Abkühlen des Stranges und mechanisches Zerkleinern der Stränge, sowie auf eine Vorrichtung zur Durchführung dieses Verfahrens. Unter Vorprodukten mit hoher spezfischer Oberfläche werden generell Kunststoffprodukte verstanden, welche sich durch ein hohes Oberflächen/Gewichtsverhältnis auszeichnen. Derartige Vorprodukte fallen als zermahlene Angüsse, gemahlene Folien, Textil-Faserabfälle und ähnliches an. Die hohe spezifische Oberfläche führt nun dazu, daß bei Lagerung solcher Vorprodukte bzw. Abfallprodukte Luftfeuchtigkeit in hohem Maße aufgenommen werden kann. Diese Luftfeuchtigkeit stört bei Aufarbeitung dieser Vorprodukte bzw. Abfallprodukte, da es nicht möglich ist, mit solchen Vorprodukten oder Afallprodukten hoher Restfeuchtigkeit homogene weiterverarbeitbare Produkte herzustellen. Verschiedene Kunststoffe, welche in Form solcher Vorprodukte bzw. Abfallprodukte zur Verfügung stehen, weisen darüberhinaus noch den Nachteil auf, selbst mehr oder weniger hygroskopisch zu sein. Zu diesen Kunststoffen zählen insbesondere Polyamide, lineare Polyester, Polymethylmethacrylat, Polycarbonate, verschie-

- 2 -

0006837

dene lineare Polyurethane, usf.. Polyolefine sind selbst nicht in nennenswertem Ausmaß hygroskopisch, jedoch kann auch bei solchen Vorprodukten, wenn eine hohe spezfische Oberfläche vorhanden ist, ein beträchtlicher Anteil von Feuchtigkeit enthalten sein.

Aus der US-PS 3 193 601 ist es bekannt, thermoplastische Kunststoffabfällen zu verdichten und diese verdichteten Abfälle einem dem Verdichter angeschlossenen Extruder zuzuführen, in welchen die Abfälle geschmolzen und als Stränge ausgepreßt und geschnitten werden. Die in den Abfällen enthaltene Feuchtigkeit kann aber auf diese Weise nicht entfernt werden.

Die Erfindung hat sich nun die Aufgabe gestellt, aus den genannten Vor- oder Abfallprodukten aus thermoplastischen Kunststoffen ein in einfacher Weise und ohne Schwierigkeiten weiterzuverarbeitendes Zwischenprodukt, nämlich Granulat, mit gegenüber den Produkten bekannter Wiederaufbereitungsverfahren verbesserten Eigenschaften herzustellen. Das Granulat aus den ursprünglichen Vor- bzw. Abfallprodukten weist bereits eine wesentlich geringere spezifische Oberfläche auf und kann daher besser ohne die Gefahr einer neuerlichen Feuchtigkeitsaufnahme, beispielsweise durch Abfüllen in Kunststoffsäcke, gelagert werden. Vor allem aber ist die unmittelbare Weiterverarbeitung eines solchen Zwischenproduktes frei von den Nachteilen einer Verarbeitung der eingangs genannten Vorprodukte bzw. Abfallprodukte. Zur Lösung dieser Aufgabe ist die Erfindung im wesentlichen dadurch gekennzeichnet, daß das Vorprodukt vor dem Einbringen in den die Stränge auspressenden Extruder über seinen Erweichungspunkt erhitzt wird und bei der Übergabe an den die Stränge auspressenden Extruder unter Luftzutritt getrocknet wird. Bei den Temperaturen über den Erweichungstemperaturen des Kunststoffes wird die enthaltene Restfeuchtigkeit besonders schnell entfernt. In besonders einfacher Weise kann das erfindungsgemäße Verfahren so durchgeführt werden, daß das Vorprodukt in Form von Folien extrudiert wird und
die extrudierten Folien dem Aufnahmetrichter des die
Stränge auspressenden Extruders zugeführt werden.

Verschiedene thermoplastische Kunststoffe schmelzen nur
unter Zersetzung. Bei diesen Kunststoffen darf die Erhitzung nur bis knapp über den Erweichungspunkt reichen,
um eine Zerstörung des Materials zu vermeiden. Thermoplastische Kunststoffe, wie beispielsweise Polyamide,
welche in großen Mengen als Faserabfälle erhältlich sind,
können aber ohne weiteres höher erhitzt werden, da bei
solchen Kunststoffen die Gefahr einer Zersetzung nicht
gegeben ist. Das erfindungsgemäße Verfahren kann mit Vorteil bei der Verwendung von thermoplastischen Kunststoffen, welche ohne Zersetzung schmelzen, so durchgeführt
werden, daß die Erhitzung bis über den Schmelzpunkt erfolgt. Auf diese Weise wird die mögliche Entwässerung
verbessert, da Wasser bei den Temperaturen des Schmelzpunktes in der Regel ohne Schwierigkeiten auch unter
Druck verdampft. Erfindungsgemäß können unmittelbar vor
dem Eintritt in den die Stränge auspressenden Extruder
Füllstoffe wie Farbpigmente, Gleitmittel oder Armierungsmaterial, wie z.B. Glasfasern, zugeführt werden.

Die erfindungsgemäße Vorrichtung zur Durchführung dieses
Verfahrens mit einem Strangextruder zum Auspressen von
Strängen ist im wesentlichen dadurch gekennzeichnet,
daß dem Strangextruder ein Folienextruder vorgeschaltet
ist, wobei der Aufnahmetrichter des Strangextruders im
Abstand unterhalb des Spritzkopfes des Folienextruders
angeordnet ist. Auf diese Weise wird eine besonders einfache Vorrichtung geschaffen, welche aus zwei entsprechend
ausgerüsteten Extrudern zusammengebaut werden kann. Dadurch, daß aus dem Folienextruder Folien extrudiert werden, ergibt sich eine große Oberfläche des erhitzten Materials und das Wasser kann besonders leicht entweichen.
Die Entwässerungswirkung kann erfindungsgemäß noch dadurch
verbessert werden, daß die Längsachse der Spritzdüse des Folienextruders parallel zur Achse der Schnecke des Strangextruders angeordnet ist. Auf diese Weise tritt die Folienbahn zur Gänze ohne Verdrehung der Achse der Folienbahn in den Strangextruder ein und es wird bei geringsten Abmessungen eine möglichst lange Strecke, über welche die Entwässerung erfolgt, gewährleistet. Zu diesem Zweck ist es vorteilhaft, die Vorrichtung so auszubilden, daß die Längenerstreckung der Spritzdüse des Folienextruders kleiner ist als die Länge des Grundes des Aufnahmetrichters des Strangextruders in Richtung dessen Schneckenachse. Um zu verhindern, daß die Extrusionswärme des Folienextruders verlorengeht, wird die Ausbildung vorzugsweise so getroffen, daß der Strangextruder im Bereich seines Aufnahmetrichters, in Achsrichtung der Schnecke vor und nach dem Aufnahmetrichter mit Heizeinrichtungen versehen ist. Bei einer solchen Ausbildung würde nun das Getriebe und der Antrieb bei einem konventionellen Extruder thermisch hoch belastet werden und es ist daher vorteilhaft, wenn das Getriebe für den Antrieb der Schnecke des Strangextruders von dessen Zylinder thermisch isoliert,insbesondere in Abstand vom trichteseitigen Ende der Schnecke, angeordnet ist. Im gleichen Sinne kann auch die Welle zur Verbindung des Antriebsgetriebes mit der Schnecke Kühlkörper, insbesondere Kühlrippen, aufweisen.

Gemäß einer bevorzugten Weiterbildung der erfindungsgemäßen Einrichtung ist an den Aufnahmetrichter des Strangextruders eine Dosiereinrichtung zum Zuführen von Füllstoffen, Farbpigmenten, Gleitmitteln oder Armierungsmaterial, wie beispielsweise Glasfasern, angeschlossen.

Die aus dem Folienextruder austretenden Folien werden durch die abströmenden Wasserdämpfe teilweise zerrissen. Um eine vollständige Entwässerung zu gewährleisten, weist vorzugsweise die Spritzdüse des Folienextruders eine lichte Breite von 0,5 bis 2 mm, vorzugsweise 0,9 bis 1,3 mm, auf.

Für eine besonders schonende Aufarbeitung der Vorprodukte bzw. der Abfallprodukte empfiehlt es sich, die Temperaturdifferenz zwischen aufeinanderfolgenden Zonen der Schnecke des Folienextruders relativ gering zu wählen und es kommen hiebei Temperaturdifferenzen zwischen 5 und 15°C in aufeinanderfolgenden Zonen in Frage. Die erfindungsgemäße Einrichtung ist hiebei vorzugsweise so ausgebildet, daß der Folienextruder über seine Längsachse verteilte Heizeinrichtungen aufweist, welche in aufeinanderfolgenden Querschnitten auf ansteigende Temperatur einstellbar sind, und daß der Strangextruder im Bereich seines Aufnahmetrichters auf eine Temperatur, welche großer oder gleich der Spritzkopftemperatur des Folienextruders ist, einstellbar ist. Die Heizeinrichtungen des Strangextruders können durchwegs auf der gleichen Temperatur gehalten werden. In vorteilhafter Weise wird zur Verbesserung der Entwässerungswirkung an der Übergangsstelle des Materials vom Folienextruder an den Strangextruder Luft zugeführt, um an dieser Stelle einen sicheren Abtransport der Wasserdämpfe zu gewährleisten.

Vorzugsweise ist die Ausbildung so getroffen, daß die Drehzahl der Förderschnecke des Folienextruders in Abhängigkeit von der Drehzahl der Förderschnecke des Strangextruders einstellbar ist. Auf diese Weise kann ein Materialstau an der Übergabestelle zwischen dem Folien- und Strangextruder vermieden werden.

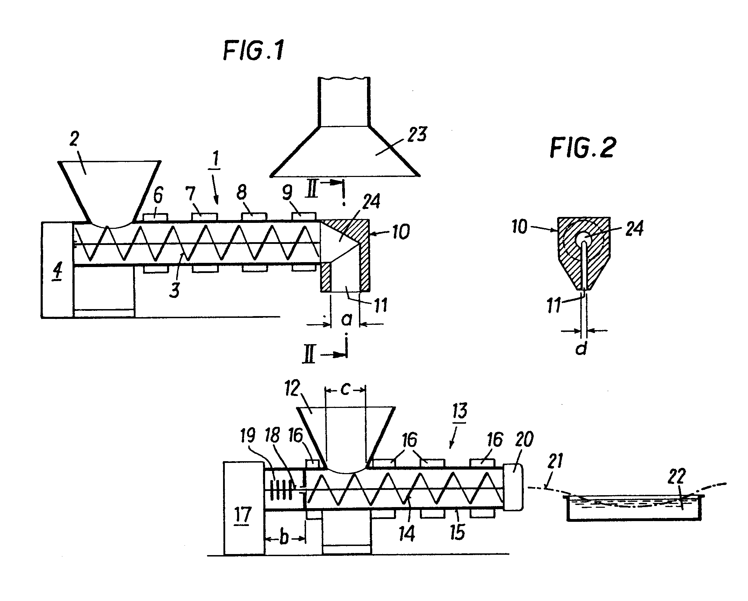

Die Erfindung wird nachfolgend anhand eines schematisch dargestellten Ausführungsbeispieles näher erläutert. In diesem zeigt Fig.1 eine Seitenansicht der erfindungsgemäßen Vorrichtung, teilweise im Schnitt, und Fig.2 einen Schnitt durch den Spritzkopf des Folienextruders nach der Linie II-II der Fig.1.

Der Folienextruder ist in der Zeichnung mit 1 dargestellt.

In den Aufnahmetrichter 2 dieses Folienextruders werden Polyamidfaserabfälle eingebracht, welche im Bereich dieses Aufnahmetrichters 2 von einer Schnecke 3 erfaßt werden. Der Antriebsmotor und das Getriebe ist mit 4 angedeutet. Längs des Zylinders, welcher die Schnecke umgibt, sind Heizeinrichtungen 6, 7, 8 und 9 vorgesehen. Die aufeinanderfolgenden Heizeinrichtungen sind hiebei auf eine Temperaturdifferenz von $10^{\circ}$ eingestellt, wobei die Temperatur bis zum Spritzkopf 1o ansteigt. Bei einer Ausführungsform der erfindungsgemäßen Einrichtung sind über eine Länge von etwa 2,8 m sechs Heizeinrichtungen vorgesehen, welche im Falle der Extrusion von Polyamiden von $210^{\circ}C$ ausgehend, das Material bis auf $270^{\circ}C$ erhitzen. Der Spritzkopf 1o selbst ist gleichfalls auf etwa $270^{\circ}C$ erwärmt und durch diesen Extruder werden bei einer Ausführungsform 60 kg Material pro Stunde ausgepreßt. Der Spritzkopf 10 weist eine Breitschlitzdüse 11 auf, deren Länge a bei einer Ausführungsform der Vorrichtung mit 120 mm bemessen ist. Die durch die Breitschlitzdüse 11 ausgepreßte Folienbahn gelangt in den Aufnahmetrichter 12 des Strangextruders 13, welcher über den die Schnecke 14 umgebenden Zylinder 15 verteilte Heizeinrichtungen 16 aufweist. Die Heizeinrichtungen 16 sind auch unmittelbar im Bereich des Aufnahmetrichters 12 vorgesehen und das Getriebe und der Antriebsmotor 17 dieses Strangextruders 13 ist in einem Abstand b vom trichterseitigen Ende der Schnecke 14 angeordnet. Die mit dem Getriebe in Verbindung stehende Welle 18 weist hiebei Kühlrippen 19 auf, so daß das Getriebe thermisch vom die Schnecke 14 umgebenden Zylinder 15 getrennt ist.

Die lichte Weite c des Aufnahmetrichters 12 in Achsrichtung der Schnecke 14 ist hibei größer als die Länge a der Breitschlitzdüse 11. Mit 20 ist der Spritzkopf des Strangextruders 13 bezeichnet, welcher die Stränge 21 auspreßt. Die ausgepreßten Stränge 21 gelangen in der Folge in einen mit Wasser gefüllten Behälter 22, in welchem sie abgekühlt werden, worauf sie in nicht darge-

0006837

stellter Weise zu Granulat zerkleinert werden.

Im Bereich der Übergabe des Materials aus dem Spritzkopf 10 des Folienextruders an den Aufnahmetrichter 12 des Strangextruders kann zusätzlich Luft zur besseren Abfuhr der Feuchtigkeit zugeführt werden. Es ist eine Absaughaube 23 für die Abfuhr der Wasserdämpfe und der gegebenenfalls zusätzlich zugeführten Luft vorgesehen.

Der Extrusionskopf 10 ist in Fig.2 im Schnitt nach der Linie II-II der Fig.1 dargestellt. Mit 24 ist der Mündungsraum für das durch die Schnecke 3 eingeförderte Material bezeichnet. Die Düse 11 weist eine Breite d auf, welche bei einer Ausführungsform 1,2 mm aufweist.

An den Trichter 12 können die dargestellten Dosiervorrichtungen zum Zuführen von Füllstoffen, Farbpigmenten, Gleitmitteln oder Armierungsmaterial, wie beispielsweise Glasfasern, angeschlossen sein.

Patentansprüche:

1. Verfahren zur Herstellung von Granulat aus Vorprodukten aus thermoplastischen Kunststoffen mit hoher spezifischer Oberfläche, insbesondere Faserabfällen, beispielsweise Polyamidfaserabfällen, durch Extrudieren des Kunststoffes in Strangform, Abkühlen des Stranges und mechanisches Zerkleiner der Stränge, dadurch gekennzeichnet, daß das Vorprodukt vor dem Einbringen in den die Stränge auspressenden Extruder über seinen Erweichungspunkt erhitzt wird und bei der Übergabe an den die Stränge auspressenden Extruder unter Luftzutritt getrocknet wird.

2. Verfahren nach Anspruch 1, dadurch gekennzeichnet, daß das Vorprodukt in Form von Folien extruidert wird und die extrudierten Folien dem Aufnahmetrichter des die Stränge auspressenden Extruders zugeführt werden.

3. Verfahren nach Anspruch 1 oder 2, dadurch gekennzeichnet, daß bei Verwendung von ohne Zersetzung schmelzenden thermoplastischen Kunststoffen die Erhitzung des Vorproduktes über den Schmelzpunkt erfolgt.

4. Verfahren nach Anspruch 1, 2 oder 3, dadurch gekennzeichnet, daß Füllstoffe wie Farbpigmente, Gleitmittel oder Armierungsmaterial, wie z.B. Glasfasern, unmittelbar vor dem Eintritt in den die Stränge auspressenden Extruder zugesetzt werden.

5. Vorrichtung zur Durchführung des Verfahrens nach einem der Ansprüche 1 bis 4 mit einem Strangextruder zum Auspressen von Strängen, dadurch gekennzeichnet, daß dem Strangextruder (13) ein Folienextruder (1) vorgeschaltet ist, wobei der Aufnahmetrichter (12) des Strangextruders (13) im Abstand unterhalb des Spritzkopfes (10) des Folienextruders (1) angeordnet ist.

6. Vorrichtung nach Anspruch 5,
dadurch gekennzeichnet,
daß die Längsachse der Spritzdüse (11)des Folienextruders (1) parallel zur Achse der Schnecke des Strangextruders (13) angeordnet ist.

7. Vorrichtung nach Anspruch 5 oder 6,
dadurch gekennzeichnet,
daß die Längenerstreckung (a) der Spritzdüse (10) des Folienextruders (1) kleiner ist als die Länge (c) des Grundes des Aufnahmetrichters (12) des Strangextruders (13) in Richtung dessen Schneckenachse.

8. Vorrichtung nach Anspruch 5, 6 oder 7,
dadurch gekennzeichnet,
daß der Strangextruder (13) im Bereich seines Aufnahmetrichters (12), in Achsrichtung der Schnecke (14) vor und nach dem Aufnahmetrichter (12) mit Heizeinrichtungen (16) versehen ist.

9. Vorrichtung nach Anspruch 8,
dadurch gekennzeichnet,
daß das Getriebe (17) für den Antrieb der Schnecke (14) des Strangextruders (13) von dessen Zylinder (15) thermisch isoliert, insbesondere in Abstand (b) vom trichterseitigen Ende der Schnecke (14) angeordnet ist.

10. Vorrichtung nach Anspruch 9,
dadurch gekennzeichnet,
daß die Welle (18) zur Verbindung des Antriebsgetriebes (17) mit der Schnecke (14) Kühlkörper, insbesondere Kühlrippen (19) aufweist.

11. Vorrichtung nach einem der Ansprüche 5 bis 10, dadurch gekennzeichnet, daß an den Aufnahmetrichter (12) des Strangextruders (13) eine Dosiereinrichtung zum Zuführen von Füllstoffen, Farbpigmenten, Gleitmitteln oder Armierungsmaterial, wie beispielsweise Glasfasern, angeschlossen ist.

12. Vorrichtung nach einem der Ansprüche 5 bis 11, dadurch gekennzeichnet, daß der Folienextruder (1) über seine Längsachse verteilt Heizeinrichtungen (6, 7, 8, 9) aufweist, welche in aufeinanderfolgenden Querschnitten auf ansteigende Temperatur einstellbar sind, und daß der Strangextruder (13) im Bereich seines Aufnahmetrichters (12) auf eine Temperatur, welche größer oder gleich der Spritzkopftemperatur des Folienextruders (1) ist, einstellbar ist.

13. Vorrichtung nach einem der Ansprüche 5 bis 12, gekennzeichnet durch eine Einrichtung zur Zuführung von Frischluft zwischen dem Spritzkopf (10) des Folienextruders (1) und dem Aufnahmetrichter (12)des Strangextruders (13), welche das aus dem Folienextruder (1) austretende Material in dem genannten Bereich mit Luft ummantelt.

1979-o4-10  rp

FIG.1

FIG.2

0006837

Nummer der Anmeldung

EP 79 890 013.0

### Europäisches Patentamt

## EUROPÄISCHER RECHERCHENBERICHT

| EINSCHLÄGIGE DOKUMENTE | | |
|---|---|---|
| Kategorie | Kennzeichnung des Dokuments mit Angabe, soweit erforderlich, der maßgeblichen Teile | betrifft Anspruch |
| | DE- B - 1 213 981  (HANS HENCH) <br><br> * Spalte 3, Zeilen 25 bis 49, Fig. 1 und 2 * <br><br> -- | 5,6 |
| A | DE - A1 - 2 461 900 (ZIMMER) <br><br> * Seite 5, Zeilen 7 bis 15 * <br><br> -- | |
| A | AT - B - 256 439 (FRITJOFF SCHWÄRZLER) <br><br> * Anspruch 1 * <br><br> -- | |
| D | US - A - 3 193 601 (J.G.S. BILLINGSLEY) <br> & DE - A - 1 454 855 <br><br> ---- | |

**KLASSIFIKATION DER ANMELDUNG (Int.Cl.3)**

B 29 C   29/00

B 29 B   1/00

B 29 F   3/00

**RECHERCHIERTE SACHGEBIETE (Int. Cl.3)**

B 29 B   1/00

B 29 C   29/00

B 29 F   3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Berlin | 01-10-1979 | BRUCK |

EPA form 1503.1  06.78